# EUROPEAN PATENT APPLICATION

(11) **EP 1 422 435 A1**
(43) Date of publication of application: **26.05.2004**
(21) Application number: 03256920.4
(22) Date of filing: 31.10.2003
(51) Int. Cl.: F16D 69/04, F16D 13/64

(54) **Multi-segmented friction plate with maximized steel-to-oil surface area for improved thermal capacity**

(30) Priority: 22.11.2002 US 303142
(71) Applicant: BorgWarner Inc., Auburn Hills, MI 48326 (US)
(72) Inventor: Hardies, Tom C., Hinsdale Illinois 60521 (US); Murphy, Kevin P., Oak Park Illinois 60304 (US); Kowal, Steven J., Naperville Illinois 60563 (US)
(74) Representative: Lerwill, John

(57) **Abstract**

A process for forming a friction plate includes the steps of: adhering a plurality of segments of friction materials to a preheated core plate. Each segment of friction material has a layer of an adhesive material adhered to a bottom surface of the segment such that the adhesive material is in contact with the preheated core plate.

## Description

### TECHNICAL FIELD

The present invention relates generally to a method and apparatus for making a friction plate having a friction material facing and to the friction material itself. More specifically, the invention is directed to a method and apparatus for making a friction plate having friction material on one or both sides of a core plate. The process eliminates the need for any glue or adhesive film on all areas of a friction plate except directly under the friction material. The resulting friction plate has a more efficient thermal heat transfer from the core or separator plate to the oil than prior art friction materials.

The present invention also relates generally to automatic transmission clutch plates, and more particularly, to a clutch plate having a friction material bonded thereto.

### BACKGROUND OF THE INVENTION

Prior art multi-plate clutches generally comprise a plurality of interleaved clutch discs and reaction plates which engage to provide the transmission of energy from a drive engine to a drive wheel. Wet-type clutches also utilize a lubricant such as oil to reduce clutch wear, cool the friction facings of the clutch discs, and provide desired hydrostatic forces between the clutch plates and clutch discs.

The friction material is usually composed of fibrous paper which normally is impregnated with a phenolic resin. The friction material is commonly cut from a continuous strip of rectangular sheeting composed of the friction material which is fed through the die or cutting apparatus. The friction material is relatively expensive and, therefore, it is desirable to optimize the elimination of waste from the manufacturing process.

Once the friction material is impregnated with the phenolic thermoset resin, it cannot be economically recycled. Therefore, the elimination of waste and/or scrap products from the manufacture process assists in meeting industry environmental compliance standards. This is especially important since the proper disposal of any scrap is the focus of increasing regulation by current environmental regulators. The scrap resulting from the cutting process must be disposed of in an appropriate manner and this disposal is becoming increasingly costly.

Further, in the interest of optimizing clutch life, operational smoothness, and cooling efficiency for the friction facings, numerous clutch designs, including a large variety of friction facing materials and designs of friction facing materials, have been developed. A common friction facing, currently available is shown by U.S. Patent Nos. 4,260,047 and 4,674,616 which disclose friction discs, for use with clutches, which are formed from friction material that are produced from the joining of a plurality of separate arcuate segments. The arcuate segments are pre-grooved to allow cooling oil to flow over the friction facing during clutch operation.

The U.S. Patent Nos. 5,094,331, 5,460,255, 5,571,372, 5.776,288, 5,897,737 and 6,019,205 disclose clutch friction plates having a large number of individually placed friction material segments on the plate. The segments are in a spaced apart relationship such that an oil groove is provided between every adjacent segment.

The U.S. Patent Nos. 3,871,934 and 4,002,225 show a friction material wound around the outer periphery disc, such that the friction material overlaps the disc on both sides. The overlapping material is then cut at intervals around the periphery and folded onto the surface of the disc.

The U.S. Patent No. 5,335,765, discloses a friction member having sets of first grooves and second grooves disposed in a radial plane and inclined obliquely backwardly in relation to the direction of rotation.

The U.S. Patent Nos. 5,615,758 and 5,998,311 show friction yarn facing materials with no grooves, but rather, the warp and fill yarns form channels to allow for the flow of fluid therethrough.

The manufacturing of many of these friction materials produce a large amount of unused or scrap material. It is, therefore, a primary object of the invention to effectively reduce the amount of scrap remaining after cutting of the friction material.

It is also desired that there is sufficient cooling and lubrication of the friction material and clutch plates such that smooth engagement and disengagement of the clutch is maintained without creating excessive wear on the members of the clutch and friction facing material. Various prior art friction material designs incorporate the use of grooves or slot patterns within the facing material to achieve the desired cooling and lubrication by allowing the passage of a fluid such as oil through the friction facings. Such cooling grooves are generally produced from one of three labor intensive methods. One method provides that the friction material is pre-grooved prior to being cut and applied to the clutch plate in a manner such as that taught by U.S. Patent No. 4,260,047. Another method of producing grooves utilizes a configured tooling to compress portions of the friction material during a hot pressure bonding process. The third method involves producing cut grooves in a finished friction plate by mounting the plate onto a fixture and passing multiple milling and grinding wheels through the friction material to cut distinct grooves of desired depth and definition.

The common failing of the previous designs of friction materials lies in the formation of intricate shapes and designs which consequently leads to manufacturing complexities, increased tooling costs, increased scrap production and the resultant concerns regarding proper disposal of the scrap. Further, the previous friction materials are all individually manufactured to specific types of friction clutches and, generally speaking, cannot be used in a wide variety of applications.

It is an object of the present invention to manufacture a friction clutch plate having distinct cooling groove patterns of desired depth and definition without the need for secondary operations and the attendant machinery needed to make such groove patterns.

It is another object of the invention to provide an apparatus for making a continuous friction material which nearly scrapless in its manufacture.

It is yet another object of the present invention to provide a method and apparatus for making a friction material having a plurality of desired grooves therein.

Yet another object of the invention is to provide a method and apparatus for making a friction material having design advantages designated to produce enhanced product performance, and specifically improved thermal capacity, and reduced "break-in" and reduced change in friction performance during early product life.

Yet a further object of the invention is to produce a method and apparatus for making a friction material having the capability of maintaining static pressure and holding dynamic fluid flow within the grooves of the friction material during operation of the engaged clutch disc and clutch plate.

It is another object of the invention to provide a friction material which is universally applicable to differing types of clutch usage.

Yet another object of the invention is to provide a method for bonding the friction material to a core plate by induction bonding, or other suitable methods, of the friction material to the core plate.

### BRIEF DESCRIPTION OF THE DRAWINGS

Fig. 1 is a graph showing finite element mesh (paper segments aligned on adjacent plates).
Fig. 2 is a graph showing finite element mesh (paper segments offset on adjacent plates) and boundary conditions.
Fig. 3 is a graph showing temperature contours (paper segments aligned, full adhesive coating).
Fig. 4 is a graph showing heat flow rate contours (paper segments aligned, full adhesive coating).
Fig. 5 is a graph showing temperature contours (paper segments aligned, partial adhesive coating).
Fig. 6 is a graph showing heat flow rate contours (paper segments aligned, partial adhesive coating).
Fig. 7. is a graph showing temperature contours (paper segments offset, full adhesive coating).
Fig. 8 is a graph showing heat flow rate contours (paper segments offset, full adhesive coating).
Fig. 9 is a graph showing temperature contours (paper segments offset, partial adhesive coating.
Fig. 10 is a graph showing heat flow rate contours (paper segments offset, partial adhesive coating).
Fig. 11 is a top view of a core plate with unitarily adhered segments of friction material.
Fig. 12 is a cross-sectional view, taken along the line 12-12, in Fig.11.
Fig. 13 is a cross-sectional view, taken along the line 13-13, in Fig. 11.

### BRIEF DESCRIPTION OF THE PREFERRED EMBODIMENTS

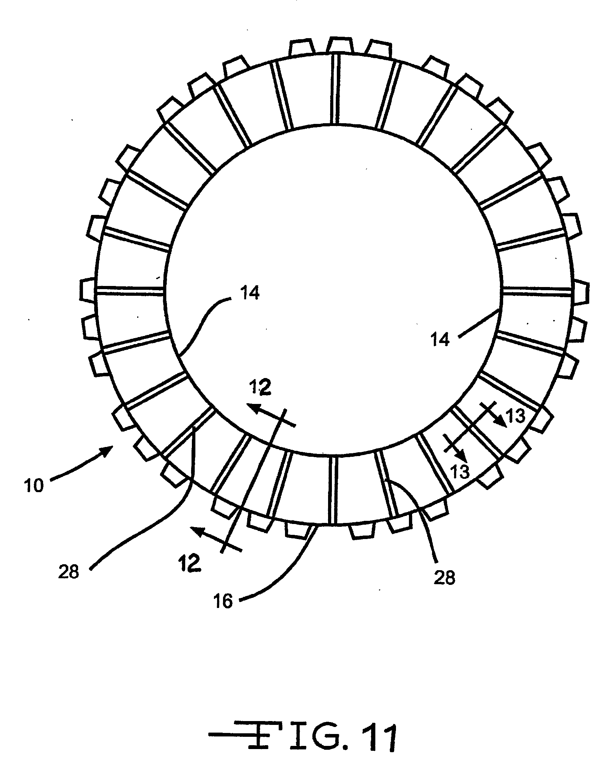

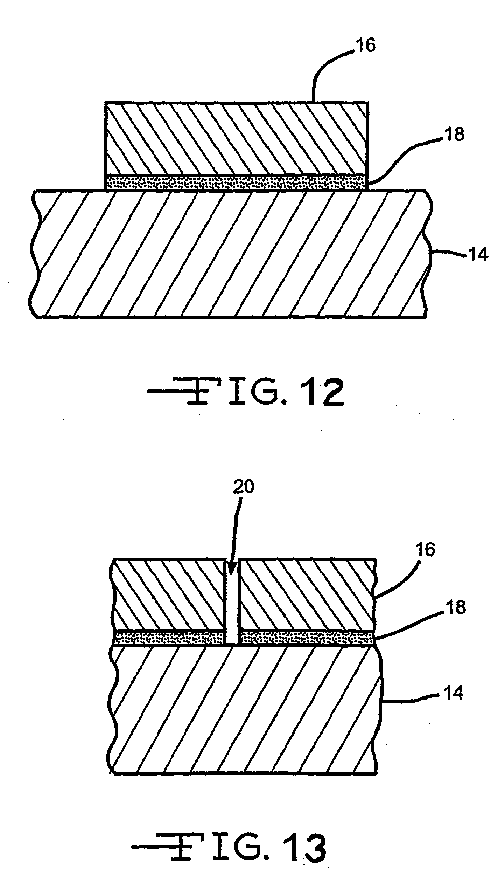

A friction material and a method and apparatus for making a wet-type friction clutch plate are disclosed. Referring first to Figs. 11-13, a clutch plate 10 includes a core plate 14 having a plurality of unitarily adhered segments 16 of friction material with an adhesive 18 on a lower surface of the friction material. The segments 16 of friction material are positioned on the core plate 14 such that a plurality of grooves 20, or openings, are formed on the core plate. That is, the groove 20 is formed between adjacent, yet spaced apart, segments 16 of friction material. Fig. 12 is a schematic illustration, taken along line 12-12 in Fig. 11, showing the core plate 12, the friction material segment 16 and a layer of adhesive material 18 adhered to one side of the friction material 16. Fig. 13 is a schematic illustration, taken along line 13-13 in Fig. 11, showing no adhesive material in the groove 20.

As the performance requirements for automobiles become more stringent, the clutches must be able to provide high torque at high RPMs thereby operating efficiently at high temperatures. This performance requirement therefore demands more expensive, higher performance materials for use as the friction material. Thus, as the material costs increase, the present invention provides for an efficient method to produce a friction plate which optimizes the desired friction surface area while simultaneously striving to maintain cooling and lubrication requirements. The unitarily adhered segmented friction material is responsive to the greater heat generation and the greater heat dissipation which occur within the clutch. It is necessary to have such a friction material in order to meet the performance standards for the higher RPM/smaller engines common to today's automobile.

Another important performance requirement of today's automotive clutches is the ability of the friction material to produce minimal drag when the clutch is not applied, e.g. an open reverse clutch that is rotating but not applied when cruising at highway speed. The lower open clutch "pack drag" translates into higher fuel efficiency of the vehicle. The present invention produces lower open pack (parasitic) drag than conventional designs (non-groove, cut grooved, molded groove) of friction plates.

The friction material is oriented on the clutch plate so as to create desired lubrication and cooling pumping functions through full depth oil channels created in the friction material. The orientation of the friction material achieves a desired direction of oil flow radially into or out of the clutch plate and also creates a desired amount of hydrostatic pressure across the plate. The size of the individual segments of friction material and the shape, spacing and orientation of the friction material affect the degree of fluid pumping, the hydrostatic pressure, and the amount of cooling of the friction clutch plate.

In particular, the present invention describes a method and apparatus for making a clutch plate with unitarily adhered segments of friction material. Each segment of friction material has a desired amount of an adhesive on the lower surface of the friction material. Each segment is placed on a face of the core plate. The unitarily adhered segments allow a maximum amount of core plate to be directly exposed to the oil in the clutch. This increased direct "steel-to-oil" contact results in a more efficient thermal transfer of heat from the core (or separator plate) to the oil.

In certain embodiments, the segmented friction material has rectangular or "keystone" shaped segments which provides an over 95% material utilization thus greatly decreasing any amount of scrape material.

According to one embodiment of the process of the present invention, the core or separator plates are preheated before receiving the friction material segments.

The adhesive and friction material can be cut or slit into preferred segment sizes and widths. The segments are moved, using for example, a magazine or conveyor belt, onto the core plate. The unitarily adhered segments are placed on the core plate and bonded.

In one particular embodiment, the core plate is transferred to a desired heating area for induction preheating. The preheated core plate is transferred to a receiving area, such as, for example, a cam or servo driven mating spline, where the unitary segments are placed on the core plate. In certain embodiments, the segments are placed two at a time at approximately 180° apart on the core plate. The core plate is then indexed for receiving additional segments. The core plate with the friction segments with the unitarily adhered friction segments thereon is transferred to a bonding area, such as, for example, a hot platen sizer, for a final bonding of the segment to the plate. In the bonding area, heat and/or pressure are applied to the core plate and friction segments to "activate" the adhesive material and securely bond the friction material to the core plate.

Heat transfer characteristics for single sided clutch element (adhesive coating on full surface as compared to adhesive coating on interface with friction material segments only) were evaluated.

The following parameters were used in the heat transfer analyses of single-sided clutch plates that have different application regions of the friction material's adhesive coating. A first, or baseline, comparative material has a ring of adhesive resin material covering one lateral side of a core plate from the friction lining's inside radius to its outside radius. In the invention material, a layer of adhesive resin material is deposited only beneath the friction material segments on one side of the core plate. A comparison of the results for the materials of the two adhesive examples shows the relative thermal transport capability for each material.

The thermal effects due to both a uniform and intermittent distribution of adhesive are shown for two different clutch pack configurations. In one configuration the friction material segments on each of the plates in the clutch are perfectly aligned. In the second configuration, the friction pads on adjacent plates are offset by half the groove pattern pitch.

Two examples are used to represent the two different paper alignment configurations. Both finite element examples have about 5000 2^{nd}-order, thermal, planar-solid elements. The 2-D examples are constructed in a plane that encompasses (approximately) the clutch assembly's axial and circumferential axes - (that is, the examples is oriented such that the part's radial axis is pointing out, i.e., in the Z direction). The examples make up the smallest repeatable unit from a clutch pack. The core plate is 2mm thick, the friction lining is 1 mm thick, and the ratio of land width to groove width is 4:1. The adhesive coating has a thickness of 0.01 mm.

Three materials are included in the finite element models for both the plate-to-plate paper alignment and non-alignment conditions. These materials are steel (thermal conductivity = .0458W/mm-°C), friction paper (thermal conductivity = .000167W/mm-°C) and adhesive resin (thermal conductivity = .000055W/mm-°C). In order to convert from full to partial adhesive coverage, the thermal conductivity constant of the adhesive resin is replaced by that of steel for appropriate elements on the surface of the core plates.

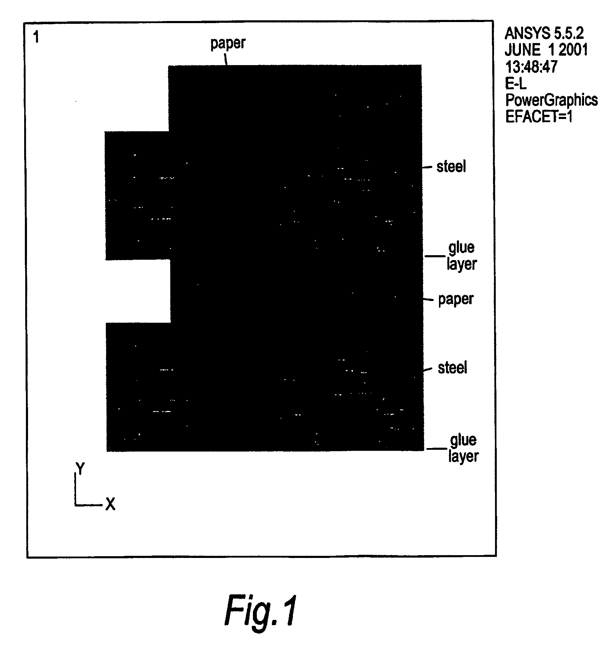

The examples for which each plate's friction material segments are in alignment is shown in Fig. 1. The finite element mesh for paper segment aligned on adjacent plates is shown and labeled -paper-steel-"glue" layer-....

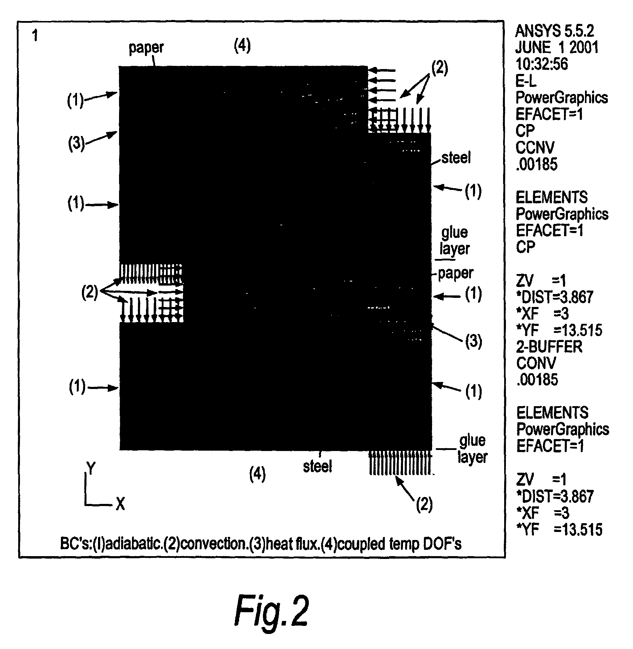

The examples given in Fig. 2 establishes the configuration which has friction material segments offset from one plate to the next.

Also shown in Fig. 2 are the boundary conditions acting on the examples, the same inputs are likewise applied to the examples in Fig. 1. Fig. 2 thus shows a finite element mesh and boundary conditions: (1) adiabatic; (2) convection; (3) heat flux; and, (4) coupled temperature DOFs (degrees of freedom). The adiabatic surfaces are perfectly insulated and these occur at examples boundaries where reflective symmetry prevails.

Convective boundary conditions approximate the effect of fluid flow through the grooves on the thermal response of the unit. A convective boundary condition is specified by two parameters - bulk temperature of the fluid and the free convection film coefficient. In all of the analyses carried out, the transmission fluid temperature is assumed to be at a constant 85.0C, and the convection coefficient is 0.001850W/mm².

The heat flux develops at the clutch's surfaces of engagement. All of the examples have two such surfaces and the heat flux applied at each is 0.0611W/mm².

Finally, coupled temperature degrees of freedom (DOF's) are assigned to nodes on the cyclic symmetric boundaries.

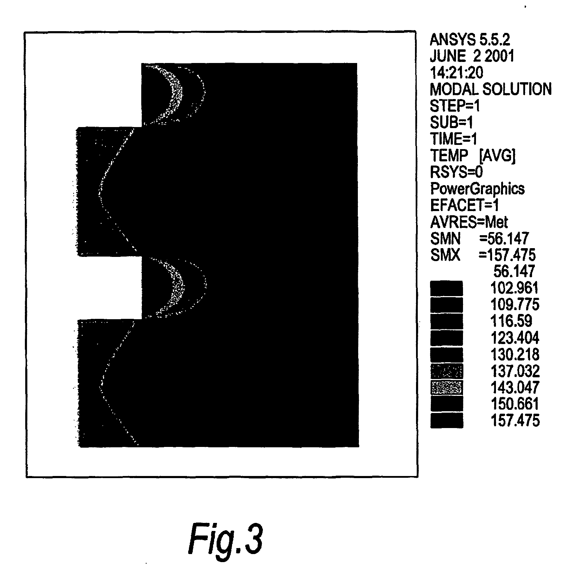

The results for the materials specified above are given in Figs. 3 through 10. Two output parameters - temperature and heat flow rate (resultant magnitude) are plotted for each of the analysis cases. The units for temperature and heat flow rate are °C and W/mm², respectively.

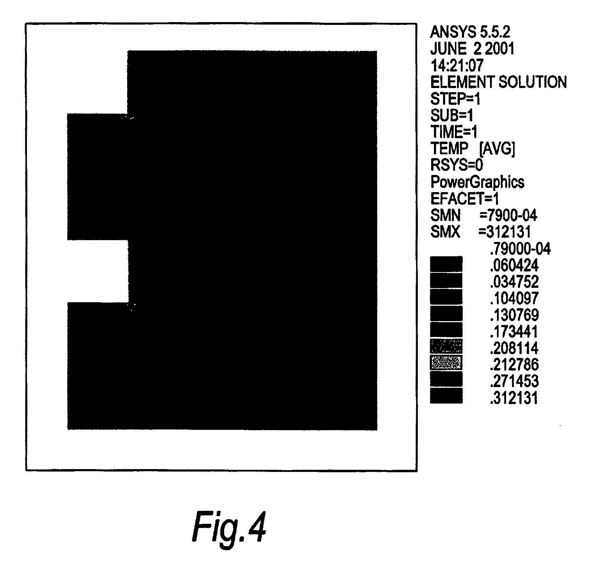

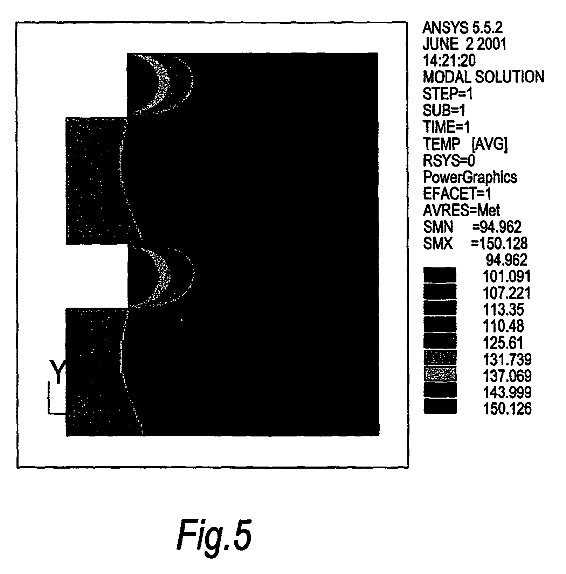

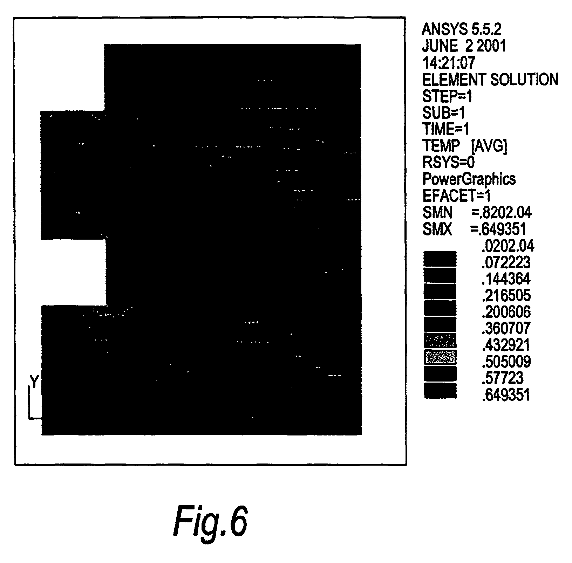

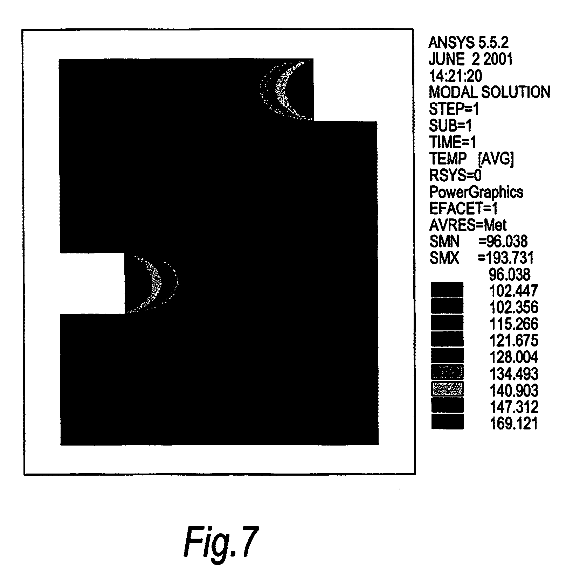

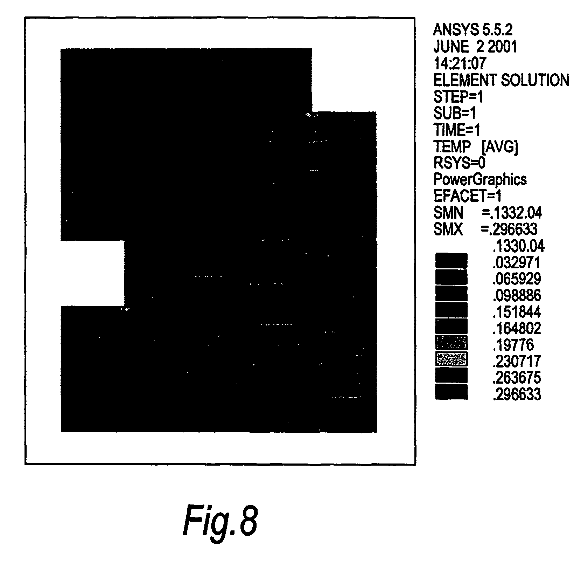

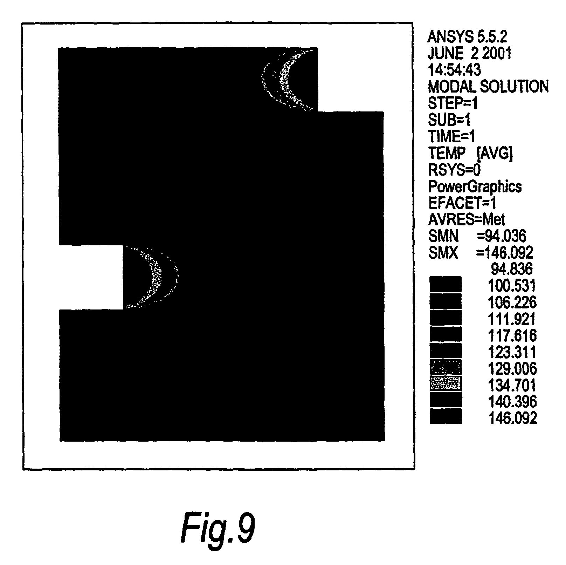

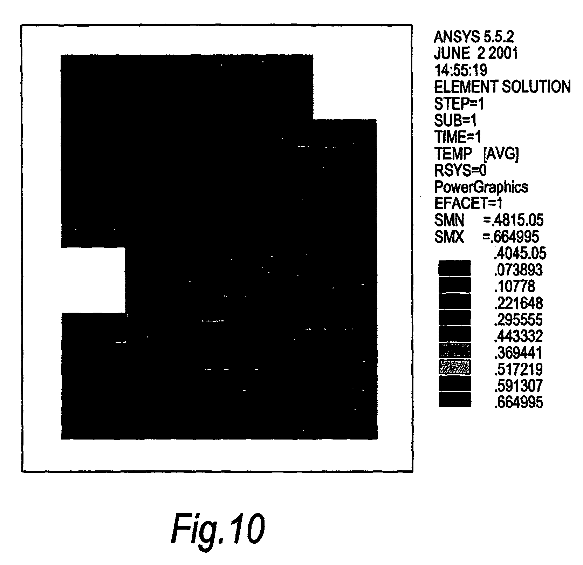

The first two contour plates, in Figs. 3 and 4, pertain to the prior art examples in which the paper segments are aligned on adjacent core plates and the adhesive resin is applied over the entire surface. The present invention examples shown in the next set of data shown in Figs. 5 and 6 are paper segments aligned in the clutch pack but with no adhesive layer across the flow grooves. The prior art examples for non-aligned friction paper segments, and full adhesive coverage are presented in Figs. 7 and 8. Finally, Figs. 9 and 10 show examples of the present invention where the temperature and heat flow rate contours for examples in which paper segments are non-aligned and the grooves are free of adhesive resin.

The reduction in maximum temperature as a result of the material and method of the present invention is between 4.5% and 5%.

Another advantage of the present invention is that the transmission fluid completely fills the grooves on the plate. Also, the convection coefficient corresponds to a non-rapid flow condition. In certain embodiments, the thickness of the adhesive layer is set at its largest value thus providing maximum insulating conditions across the flow grooves. Yet another advantage is that heat transfer at surfaces away from the friction lining is unaffected by the variation in adhesive coverage at the engagement surface.

The above detailed description of the present invention is given for explanatory purposes. It will be apparent to those skilled in the art that numerous changes and modifications can be made without departing from the scope of the invention. Accordingly, the whole of the foregoing description is to be construed in an illustrative and not a limitative sense, the scope of the invention being defined solely by the appended claims.

## Claims

1. A process for forming a friction plate comprising adhering a plurality of segments of friction materials to a preheated core plate, each segment of friction material having a layer of an adhesive material adhered to a bottom surface of the segment whereby the adhesive material is in contact with the preheated core plate.

2. The process of claim 1, wherein each segment of friction material is positioned on the core plate in a spaced apart relationship such that adjacent segments form a groove on at least a first surface of the core plate.

3. The process of claim 2, in which no adhesive material is present in the grooves on the core plate.

4. The process of claim 1, 2 or 3, in which the core plate with the segments of friction material adhered thereto is subjected to at least one of heat and/or pressure to bond the segments to the core plate.

5. A friction plate made according to the method of any one of claims 1 to 4.
